# EUROPEAN PATENT SPECIFICATION

(11) **EP 1 671 531 B1**
(45) Date of publication and mention of the grant of the patent: **18.06.2008**
(21) Application number: 05112253.9
(22) Date of filing: 15.12.2005
(51) Int. Cl.: A01D 46/26

(54) **Portable fruit tree beating device, particularly for picking olives, and method of controlling such a device**
Tragbares Gerät zum Schütteln von Obstbäumen, insbesondere Olivenbäumen, und Verfahren zum Regel eines solchen Gerätes
Appareil portable pour secouer des arbres fruitiers, particulièrement des oliviers, et procédé pour régler un tel dispositif

(30) Priority: 16.12.2004 IT TO20040879
(43) Date of publication of application: 21.06.2006
(73) Proprietor: DAVIDE E LUIGI VOLPI S.p.A., 46040 Casalromano (IT)
(72) Inventor: Tracconaglia, Giordano, 25025 Manerbio (IT)
(74) Representative: Jorio, Paolo

(56) References cited:
- EP-A- 0 974 257
- EP-A- 0 983 718
- EP-A- 1 116 432
- EP-A- 1 175 823
- EP-A- 1 273 222
- FR-A- 2 373 222
- SU-A1- 816 420
- US-A- 5 099 637

## Description

The present invention relates to a portable fruit tree beating device, particularly for picking olives, and to a method of controlling such a device.

A wide range of portable beating devices, particularly for picking olives, are known, and which substantially comprise rotary or vibratory beating members fitted to a user-gripped supporting structure. The beating members are powered by an electric motor to beat the branches of trees to shake off the fruit (olives).

SU-A-816420 discloses a device wherein two sloped beating members are carried by a common support, that rotates about a shaft which is eccentrically positioned on a further rotating plate.

Known devices of this sort are not altogether satisfactory in terms of cheap, easy production and use, or in terms of efficient, versatile, practical operation.

It is therefore an object of the present invention to provide a portable fruit tree beating device which, in addition to being cheap and easy to produce and operate, is also highly efficient and practical, and provides for superior performance and low energy consumption.

According to the present invention, there is provided a portable fruit tree beating device, particularly for picking olives, as defined by claim 1.

By virtue of the above characteristics, the device according to the invention is extremely cheap and easy to produce and use, and is highly efficient in terms of performance, yield, and low energy consumption.

An important aspect of the invention lies in the device also comprising an electronic control unit for regulating the rotation speed of the beating members, and the invention also relates to a method of controlling the device, the method being characterized by comprising the steps of: selecting a rotation speed value of the beating members from a number of preset values; rotating the beating members at a speed equal to the selected value; determining the load on the rotating beating members; and automatically regulating the rotation speed of the beating members as a function of the load on the beating members, to keep the rotation speed of the beating members substantially constant and equal to the selected value.

A non-limiting embodiment of the present invention will be described by way of example with reference to the accompanying drawings, in which:
Figure 1 shows a schematic front view of a portable fruit tree beating device, particularly for picking olives, in accordance with the invention;
Figure 2 shows a side view of the Figure 1 device in a different operating position;
Figure 3 shows a schematic top plan view of the Figure 1 device;
Figure 4 shows a larger-scale view of a detail of the Figure 1 device;
Figure 5 shows a simplified schematic view, with parts removed for clarity, of a drive assembly of the Figure 1 device.

Number 1 in the accompanying drawings indicates as a whole a portable fruit tree beating device, particularly for picking olives. Device 1 comprises an elongated grip rod 2, which is optionally telescopic or otherwise extendable in any known manner; and a head 3 having a number of rotary beating members 4.

Head 3 is fitted to a longitudinal end 5 of rod 2, and comprises a plate 6 supporting beating members 4; a casing 7 associated with plate 6; and a housing 8 fixed integrally to plate 6 and extending on the opposite side to beating members 4.

End 5 of rod 2 has an articulated connecting fork 9 having two arms 10, between which housing 8 rotates on two pins 11. Housing 8, and therefore head 3 as a whole, rotate about an adjustment axis X defined by pins 11 and substantially perpendicular to rod 2, so that head 3 is adjustable with respect to rod 2. A releasable lock lever 12 is provided to secure head 3 in a predetermined position with respect to rod 2. Head 3 being adjustable makes device 1 easier to use, makes the less accessible parts of the tree easier to reach, and also allows for controlling the drop trajectory of the fruit (olives).

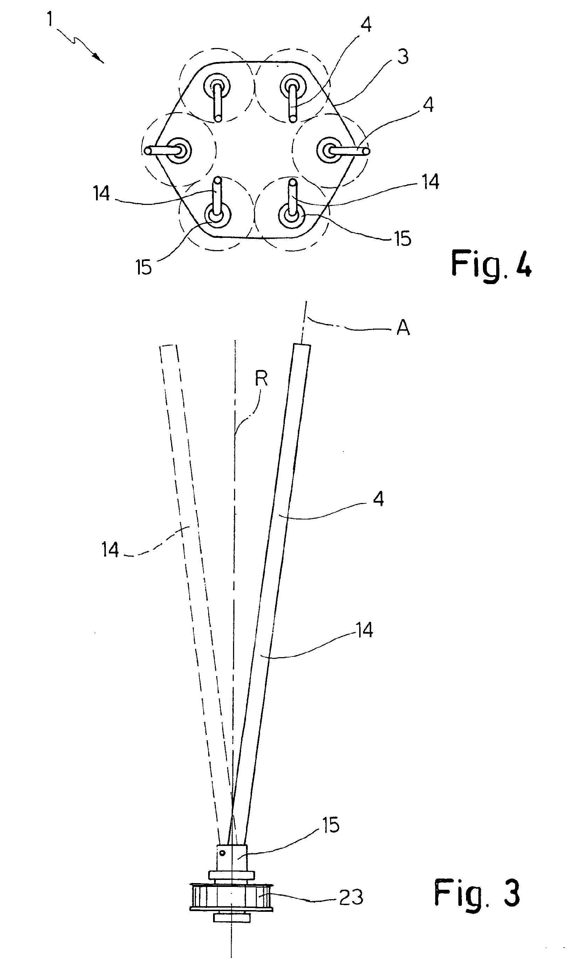

Plate 6 is fitted with a number of rotary beating members 4, which extend along respective axes A sloping with respect to plate 6, and rotate so that axes A describe respective substantially conical surfaces (Figure 3). More specifically, beating members 4 comprise respective substantially straight, e.g. substantially (though not necessarily) cylindrical, rods 14 projecting obliquely from plate 6 and variously oriented with respect to one another.

Rods 14 are fitted integrally to respective supports 15 mounted to rotate on plate 6; supports 15 rotate about respective axes of rotation R substantially parallel to one another and perpendicular to plate 6; and each rod 14 is fitted to respective support 15 to slope with respect to axis of rotation R at an angle ranging between roughly 5° and 25°, and preferably of 8-15°, e.g. roughly 10°.

In the example shown in the accompanying drawings, plate 6 is fitted with six beating members 4 substantially forming the tips of a hexagon (Figure 4). It is understood, however, that the number, arrangement, and slope of beating members 4 may differ from what is described and illustrated by way of example.

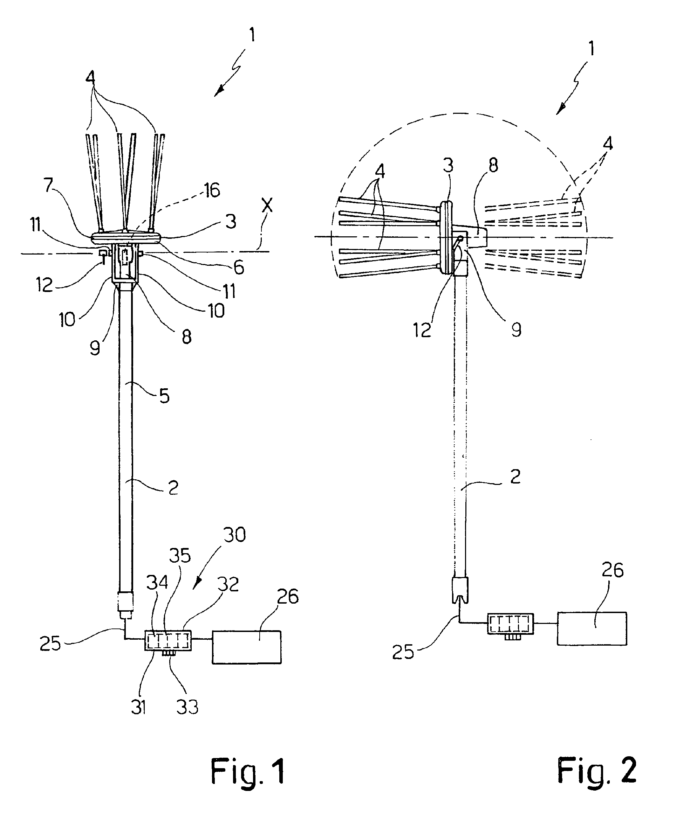

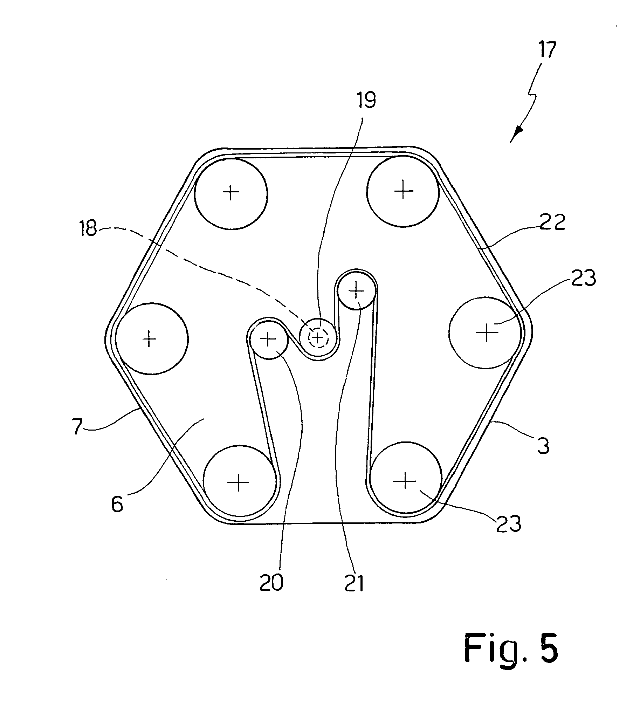

Housing 8 houses a motor 16 (Figure 1), in particular an electric motor; and supports 15 are housed inside casing 7 and powered by motor 16 via a drive assembly 17 (Figure 5) connecting a drive shaft 18 of motor 16 to beating members 4, to rotate beating members 4 synchronously. More specifically, drive assembly 17 is a belt drive, and comprises a drive wheel 19 fitted to drive shaft 18; a transmission wheel 20; an eccentric belt tensioner 21; and a drive belt 22; and supports 15 of beating members 4 have respective wheels 23 engaged by belt 22, which extends about drive wheel 19 and transmission wheel 20, successively about wheels 23, and about belt tensioner 21.

Rod 2 is hollow and threaded through with a power cable 25 of motor 16 (Figure 1). Cable 25 is connected to a portable electric battery 26, or other electrical power source, which may, for example, be carried over the shoulder or inside a user jacket pocket for that purpose.

Device 1 also comprises an electronic control unit 30 for regulating the rotation speed of beating members 4.

Unit 30 comprises a processing unit 31 (e.g. a microprocessor or electronic control board) housed inside a portable case 32, which may, for example, be attached to a belt, or directly to the user's trousers, or to the jacket containing the battery. Case 32 is fitted with controls and indicators by which to control and monitor operation of device 1.

More specifically, unit 30 comprises a speed selector 33 for selecting a rotation speed value of beating members 4 from a number of preset values, to adapt performance of device 1 to the characteristics of the tree being worked.

Unit 30 is also associated with detecting means 34 for determining the load on beating members 4, and with automatic adjusting means 35 for automatically adjusting the rotation speed of beating members 4 as a function of the load on beating members 4. Detecting means 34 and automatic adjusting means 35 may, for example, form part of processing unit 31.

Processing unit 31, for example, regulates the rotation speed of beating members 4 by acting directly on the speed of motor 16, or by adjusting the power voltage of motor 16, and therefore includes instructions for determining the load on beating members 4 and, accordingly, automatically adjusting the rotation speed of beating members 4 (by adjusting the power voltage of motor 16) to maintain the rotation speed of beating members 4 substantially constant and equal to the selected value. Even in the presence of dense branches, which could slow down operation of beating members 4, more or less constant, uniform operation of device 1, with minimum fluctuation in the rotation speed of beating members 4, is therefore ensured, thus improving the overall efficiency of device 1.

Processing unit 31 also contains instructions for automatically reducing the rotation speed of beating members 4 to a predetermined minimum value when the load on beating members 4 falls below a predetermined threshold corresponding to spinning of beating members 4 with no resistance by branches or other obstacles, and for automatically restoring the rotation speed of beating members 4 to the selected value when the load on beating members 4 again exceeds the predetermined threshold. The rotation speed of beating members 4 is therefore automatically reduced, to reduce energy consumption and increase the endurance of device 1, when device 1 is turned on, but beating members 4 are not working on the branches.

Device 1 implementing the control method according to the invention operates as follows. After appropriately orienting head 3, the user sets selector 33 to the rotation speed value of beating members 4 best suited to the tree being worked; rotation of beating members 4 describing respective conical surfaces effectively shakes the branches of the tree to detach the fruit (olives). As device 1 operates, processing unit 31 determines the load on the rotating beating members 4 and, accordingly, automatically adjusts the rotation speed of beating members 4 (by adjusting the power voltage and, therefore, the speed of motor 16) to maintain a substantially constant rotation speed. On detecting a load, on beating members 4, below the predetermined threshold corresponding to spinning of beating members 4 (i.e. beating members 4 not working in the branches of the tree), processing unit 31 automatically reduces the rotation speed of beating members 4 to the predetermined minimum value, and restores rotation speed when the load on beating members 4 again exceeds the predetermined threshold.

## Claims

1. A portable fruit tree beating device (1), particularly for picking olives, comprising a number of rotary beating members (4) projecting from a supporting plate (6) and extending along respective axes (A) inclined with respect to the plate (6); the beating members (4) comprising respective substantially straight rods (14) projecting obliquely from the plate (6) along said respective axes (A) and variously oriented with respect to one another; the device being **characterized in that** each rod (14) is fitted integrally to a respective support (15), the supports (15) being fitted to the plate (6) to rotate about respective axes of rotation (R) substantially parallel to one another and perpendicular to the plate (6), so as the beating members (4) rotate about said respective axes of rotation (R) inclined with respect to said axes (A) in such a manner that said axes (A) and said beating members (4) describe respective substantially conical surfaces.

2. A device as claimed in Claim 1, **characterized by** comprising a motor (16) and drive means (17) for synchronously rotating said beating members (4).

3. A device as claimed in one of the foregoing Claims, **characterized in that** said plate (6) is fitted to a head (3) located at one end (5) of an elongated grip rod (2); and by comprising articulating means (9, 11) between said head (3) and said end (5) of the grip rod (2), to rotate the head (3) about an adjustment axis (x) perpendicular to the grip rod (2), and so adjust the tilt of the head with respect to the grip rod.

4. A device as claimed in Claim 3, **characterized in that** said articulating means (9, 11) are associated with releasable locking means (12) for locking the head (3) in a predetermined position with respect to the grip rod (2) .

5. A device as claimed in one of the foregoing Claims, **characterized by** comprising an electronic control unit (30) for regulating the rotation speed of the beating members (4).

6. A device as claimed in Claim 5, **characterized by** comprising selecting means (33) for selecting a rotation speed value of the beating members (4) from a number of preset values.

7. A device as claimed in Claim 5 or 6, **characterized by** comprising detecting means (34) for determining the load on the beating members (4); and automatic adjusting means (35) for automatically adjusting the rotation speed of the beating members as a function of the load on the beating members.

8. A device as claimed in Claim 7, **characterized in that** said electronic control unit (30) automatically regulates the rotation speed of the beating members (4) as a function of the load on the beating members, so as to maintain the rotation speed of the beating members substantially constant and equal to the selected value.

9. A device as claimed in Claim 7 or 8, **characterized in that** said electronic control unit (30) automatically reduces the rotation speed of the beating members (4) to a predetermined minimum value, when the load on the beating members falls below a predetermined threshold corresponding to spinning of the beating members with no resistance by branches or other obstacles, and automatically restores the rotation speed of the beating members to the selected value, when the load on the beating members again exceeds said threshold.

## Patentansprüche

1. Ein tragbares Gerät (1) zum Schütteln von Obstbäumen insbesondere zum Ernten von Oliven, umfassend eine Vielzahl von rotierende Schüttelelementen (4), die von einer Halterungsplatte (6) vorstehen und sich entlang jeweiliger Achsen (A) erstrecken, die, bezogen auf die Platte (6), geneigt sind; wobei die Schüttelelemente (4) jeweilige, im Wesentlichen gerade Stäbe (14) umfassen, die schräg von der Platte (6) entlang der jeweiligen Achsen (A) vorstehen und zueinander unterschiedlich orientiert sind; das Gerät **dadurch gekennzeichnet, dass** jeder Stab (14) einstückig angebracht ist an einer jeweiligen Halterung (15), wobei die Halterungen (15) an der Platte (6) angebracht sind, um sich um die jeweiligen Achsen der Rotation (R), im Wesentlichen parallel zueinander und senkrecht zu der Platte (6), zu rotieren, so dass die Schüttelelemente (4) sich um die jeweiligen Drehachsen (R) drehen, die gegen die Achsen (A) geneigt sind, in solch einer Weise, dass die Achsen (A) und die Schüttelelemente (4) jeweils im Wesentlichen Kegelflächen beschreiben.

2. Gerät gemäß Anspruch 1, **dadurch gekennzeichnet, dass** es einen Motor (16) und Antriebsmit,tel (17) umfasst, um die Schüttelelemente (4) synchron rotieren zu lassen.

3. Gerät gemäß einem der vorangegangenen Ansprüche, **dadurch gekennzeichnet, dass** die Platte (6) an einem Kopf (3) angebracht ist, der sich an einem Ende (5) eines verlängerten Stabgriffs (2) befindet und durch das Umfassen von Gelenkmitteln (9, 11), zwischen dem Kopf (3) und dem Ende des Stabgriffs (2), um den Kopf (3) um eine Ausrichtungsachse (X) senkrecht zu dem Stabgriff (2), gedreht werden kann, und so die Kippung des Kopfes bezüglich des Stabgriffs ausgerichtet werden kann.

4. Ein Gerät gemäß Anspruch 3, **dadurch gekennzeichnet, dass** die Gelenkmittel (9, 11), gekoppelt sind mit lösbaren Feststellmitteln (12) zum Feststellen des Kopfes (3) in einer vorher festgelegten Position bezogen auf den Stabgriff (2).

5. Gerät gemäß einem der vorangegangenen Ansprüche, **dadurch gekennzeichnet, dass** es eine elektronische Steuereinheit (30) zum Regulieren der Rotationsgeschwindigkeit der Schüttelelemente (4) umfasst.

6. Gerät gemäß Anspruch 5, **dadurch gekennzeichnet, dass** es Auswahlmittel (33) umfasst, zur Auswahl eines Rotationsgeschwindigkeitswertes der Schüttelelemente (4) aus einer Vielzahl von vorher bestimmten Werten.

7. Gerät gemäß Anspruch 5 oder 6, **dadurch gekennzeichnet, dass** es Mittel zum Erkennen (34) zum Bestimmen der Last auf den Schüttelelementen (4) umfasst; und automatische Anpassmittel (35) umfasst, für die automatische Anpassung der Rotationsgeschwindigkeit der Schüttelelemente als eine Funktion der Last auf den Schüttelelementen.

8. Gerät gemäß Anspruch 7, **dadurch gekennzeichnet, dass** die elektronische Steuereinheit (30) automatisch die Rotationsgeschwindigkeit der Schüttelelemente (4) regelt, als eine Funktion der Last auf den Schüttelelementen, um die Rotationsgeschwindigkeit der Schüttelelemente im Wesentlichen konstant und gleich dem gewählten Wert zu halten.

9. Gerät gemäß Anspruch 7 oder 8, **dadurch gekennzeichnet, dass** die elektronische Steuereinheit (30) automatisch die Rotationsgeschwindigkeit der Schüttelemente (4) auf einen vorher bestimmten Minimalwert reduziert, wenn die Last auf den Schüttelelementen unterhalb eines vorbestimmten Schwellenwerts sinkt, der dem Kreisen der Schüttelstäbe ohne Widerstand durch Äste oder andere Hindernisse entspricht und automatisches Wiederherstellen der Rotationsgeschwindigkeit der Schüttelelemente auf den gewählten Wert, wenn die Last auf den Schüttelelementen den Schwellenwert wieder übersteigt.

## Revendications

1. Dispositif portable (1) pour secouer des arbres fruitiers, en particulier pour la cueillette des olives, comportant un certain nombre d'éléments tournants (4) de battement faisant saillie d'un plateau (6) de support et s'étendant suivant des axes respectifs (A) inclinés par rapport au plateau (6) ; les éléments de battement (4) comportant des tiges respectives sensiblement droites (14) faisant saillie obliquement du plateau (6) suivant lesdits axes respectifs (A) et orientées diversement les unes par rapport aux autres ; le dispositif étant **caractérisé en ce que** chaque tige (14) est pourvue de façon intégrée d'un support respectif (15), le support (15) étant monté sur le plateau (6) de façon à tourner autour d'axes respectifs de rotation (R) sensiblement parallèles entre eux et perpendiculaires au plateau (6), afin que les éléments de battement (4) tournent autour desdits axes respectifs de rotation (R) inclinés par rapport auxdits axes (A) d'une manière telle que lesdits axes (A) et lesdits éléments de battement (4) décrivent des surfaces respectives sensiblement coniques.

2. Dispositif selon la revendication 1, **caractérisé en ce qu'**il comporte un moteur (16) et un moyen d'entraînement (17) destiné à faire tourner en synchronisme lesdits éléments de battement (4).

3. Dispositif selon l'une des revendications précédentes, **caractérisé en ce que** ledit plateau (6) est monté sur une tête (3) placée à une extrémité (5) d'un manche allongé (2) ; et **en ce qu'**il comporte un moyen d'articulation (9, 11) entre ladite tête (3) et ladite extrémité (5) du manche (2), pour faire tourner la tête (3) autour d'un axe de réglage (X) perpendiculaire au manche (2), et régler ainsi l'inclinaison de la tête par rapport au manche.

4. Dispositif selon la revendication 3, **caractérisé en ce que** lesdits moyens d'articulation (9, 11) sont associés à des moyens de verrouillage libérables (12) pour verrouiller la tête (3) dans une position prédéterminée par rapport au manche (2).

5. Dispositif selon l'une des revendications précédentes, **caractérisé en ce qu'**il comporte une unité de commande électronique (30) destinée à réguler la vitesse de rotation des éléments de battement (4).

6. Dispositif selon la revendication 5, **caractérisé en ce qu'**il comporte des moyens de sélection (33) destinés à sélectionner une valeur de vitesse de rotation des éléments de battement (4) parmi un certain nombre de valeurs préétablies.

7. Dispositif selon la revendication 5 ou 6, **caractérisé en ce qu'**il comporte des moyens de détection (34) destinés à déterminer la charge imposée aux éléments de battement (4) ; et des moyens de réglage automatique (35) destinés à régler automatiquement la vitesse de rotation des éléments de battement en fonction de la charge appliquée aux éléments de battement.

8. Dispositif selon la revendication 7, **caractérisé en ce que** ladite unité de commande électronique (30) régule automatiquement la vitesse de rotation des éléments de battement (4) en fonction de la charge appliquée aux éléments de battement, afin de maintenir la vitesse de rotation des éléments de battement sensiblement constante et égale à la valeur sélectionnée.

9. Dispositif selon la revendication 7 ou 8, **caractérisé en ce que** ladite unité de commande électronique (30) réduit automatiquement la vitesse de rotation des éléments de battement (4) à une valeur minimale prédéterminée, lorsque la charge appliquée aux éléments de battement tombe en dessous d'un seuil prédéterminé correspondant à un tournoiement des éléments de battement sans résistance opposée par des branches ou d'autres obstacles, et rétablit automatiquement la vitesse de rotation des éléments de battement à la valeur sélectionnée lorsque la charge appliquée aux éléments de battement dépasse à nouveau ledit seuil.
